# EUROPÄISCHE PATENTSCHRIFT

(11) **EP 2 155 592 B1**
(45) Veröffentlichungstag und Bekanntmachung des Hinweises auf die Patenterteilung: **10.10.2012**
(21) Anmeldenummer: 08758174.0
(22) Anmeldetag: 10.06.2008
(51) Int. Cl.: B65G 61/00, B65G 65/00, B65G 57/00, B65G 59/00

(54) **VERFAHREN UND SYSTEM ZUM ROBOTER GEFÜHRTEN DEPALETTIEREN VON REIFEN**
METHOD AND SYSTEM FOR DEPALETTING TYRES USING A ROBOT
PROCÉDÉ ET SYSTÈME DE DÉPALETTISATION DE PNEUS GUIDÉE PAR ROBOT

(30) Priorität: 12.06.2007 DE 102007026956
(43) Veröffentlichungstag der Anmeldung: 24.02.2010
(73) Patentinhaber: KUKA Roboter GmbH, 86165 Augsburg (DE)
(72) Erfinder: COTTONE, Norbert, 86441 Zusmarshausen (DE); EBERHARDT, Thorsten, 89233 Neu-Ulm (DE); HEISSMEYER, Sven, 30974 Wennigsen (Deister) (DE); HOLLINGER, Alexander, 86159 Augsburg (DE); PEGHINI, Martin, 86156 Augsburg (DE)
(74) Vertreter: Patentanwälte Funk & Böss GbR
(86) Internationale Anmeldenummer: PCT/DE2008/000950
(87) Internationale Veröffentlichungsnummer: WO 2008/151613

(56) Entgegenhaltungen:
- DE-A1-102005 053 296
- US-A1- 2006 088 405

## Beschreibung

### Technisches Anwendungsgebiet

Die vorliegende Erfindung betrifft ein Verfahren sowie ein System zum robotergeführten Depalettieren von Reifen, die auf einem Träger abgelegt sind.

### Stand der Technik

Unter dem Depalettieren von Reifen wird das Entladen von Reifen aus einer Transporteinheit oder einem Ladungsträger verstanden, bspw. das Entladen von einem Container oder von einer Gitterpalette. Im Allgemeinen reicht das Spektrum der Stapelmuster der Reifen bei deren Anlieferung von geordnet über teilgeordnet bis hin zu ungeordnet oder chaotisch. Das Entladen der Reifen wird heutzutage im Falle von teil- oder ungeordneter Orientierung der Reifen auf dem Ladungsträger ausschließlich von Hand ausgeführt.

Auch das Palettieren von Reifen erfolgt in den meisten Fällen bisher noch von Hand. Aus der DE 10 2005 053 296 A1 ist inzwischen jedoch auch eine automatisierte Lösung bekannt, um Reifen auf einem Träger zu stapeln. Jedoch ist selbst bei genauer Kenntnis der Ablageposition während des Palettierens ein automatisiertes Entladen der Reifen bisher nicht immer möglich, da sich die Stapelmuster beim Transport meist noch etwas verändern und die ursprünglichen bekannten Reifen-Positionen und -Orientierungen dann nicht mehr mit der tatsächlichen Lage der Reifen übereinstimmen.

Für das Entladen von geordnet angelieferten Reifen sind bereits automatisierte Lösungen bekannt. Diese Lösungen setzen allerdings keinen Roboter, sondern mehrachsige Portalsysteme mit Lift ein, die sowohl zum Palettieren als auch zum Depalettieren von Reifen verwendet werden. So offenbart bspw. die US 2006/0088405 A1 ein Verfahren, bei dem die Reifen im Fischgrätenmuster automatisiert gestapelt und auch wieder entladen werden können. Dafür sind jedoch spezielle Behältnisse als Ladungsträger erforderlich, die ein Verrutschen der Reifen beim Transport verhindern. Ein Depalettieren von nicht oder nur teilgeordneten Reifen oder von Reifen in einem im Vorfeld unbekannten Stapelmuster ist mit diesem Verfahren nicht möglich.

EP 1 442 848 offenbart eine Robothand zur Entnahme von Gegenständen mit Vorrichtung zum Ändern die Ausrichtung der Hand gemäß dem Oberbegriff von Anspruch 9 und einem Verfahren zur deren Benutzung.

Für das Greifen von Reifen sind bereits unterschiedliche Greifwerkzeuge bekannt. So offenbart die EP 1059148 B1 eine Vorrichtung zum Greifen von Reifen am Innenradius, wobei rotationssymmetrische Elemente gegen den Wulst gepresst werden und den Reifen somit halten. Mindestens zwei dieser Halteelemente sind in radialer Richtung des Reifens beweglich ausgeführt. Die Halteelemente sind um eine Achse parallel zur Mittelachse des Reifens drehbar gelagert, um über einen Drehantriebsmechanismus ein Drehen des Reifens um die Mittelachse zu ermöglichen.

In der US 5082519 A ist ein Greifwerkzeug beschrieben, das auf dem Prinzip eines Parallelgreifers mit zwei gegeneinander beweglichen Greifbacken beruht, die Karkassen von Reifen am Außendurchmesser greifen. Mit diesem Greifwerkzeug werden die Reifenkarkassen innerhalb des Produktionsprozesses umpositioniert.

Die GB 2126153 A beschreibt ein Verfahren und ein Greifwerkzeug zum Be- und Entladen einer Reifenvulkanisiermaschine. Die Rohreifen werden dabei am inneren Wulst mit drei beweglichen Spannbacken gegriffen.

Weiterhin wird in der US 4894103 ein Greifwerkzeug beschrieben, welches im Bereich der Reifenproduktion in der Lage ist, Reifenkarkassen in eine Reifenformmaschine einzulegen und anschließend einen Rohreifen zu entnehmen. Das Greifwerkzeug weist vier Bogenelemente auf, die zum Greifen in radialer Richtung bewegt werden. Damit können die Karkassen bzw. die Rohreifen sowohl von außen als auch von innen gegriffen werden.

Die Aufgabe der vorliegenden Erfindung besteht darin, ein Verfahren sowie ein System zum Depalettieren von Reifen anzugeben, die keine speziellen Behältnisse für die Anlieferung der Reifen erfordern und mit denen auch ungeordnete oder nur teilgeordnete Reifen von einem Ladungsträger automatisiert entladen werden können.

### Darstellung der Erfindung

Die Aufgabe wird mit dem Verfahren und dem System gemäß den Patentansprüchen 1 und 9 gelöst. Vorteilhafte Ausgestaltungen des Verfahrens und des Systems sind Gegenstand der Unteransprüche oder lassen sich der nachfolgenden Beschreibung sowie dem Ausführungsbeispiel entnehmen.

Bei dem vorgeschlagenen Verfahren zum robotergeführten Depalettieren von Reifen wird wiederholt die folgende Abfolge von Schritten durchgeführt. Zunächst werden die räumliche Position und Orientierung äußerer Reifen des zu entladenden Reifenstapels sowie optional die räumliche Position und Orientierung des Trägers der Reifen mit einer Sensorik erfasst. Unter den äußeren Reifen werden die Reifen des Reifenstapels auf dem Träger verstanden, die von außen direkt zugänglich bzw. durch die Sensorik erkennbar sind. Hierbei kommt vorzugsweise ein 3D-Sensorsystem zum Einsatz, mit dem ein dreidimensionales Umfeld abgebildet werden kann. Beispiele für derartige Sensorsysteme sind Stereokameras, PMD-Kameras (PMD: Photonic-Mixer-Device), Einrichtungen zur Durchführung eines Lichtschnittverfahrens (Triangulation) oder Einrichtungen zur Laufzeitmessung mit Hilfe eines Lasers. Anhand der gelieferten Sensorsignale oder Sensordaten können nach entsprechender Analyse und Aufbereitung die räumlichen Positionen und die räumliche Orientierung der Reifen sowie optional des Trägers bestimmt und dem Roboter zur Verfügung gestellt werden. Auf eine Erfassung von Position und Orientierung des Trägers mit der Sensorik kann bspw. dann verzichtet werden, wenn diese Position und Orientierung bspw. aufgrund eines definierten Anschlages am Boden bekannt ist, an dem der Träger zum Entladen positioniert wird. Die Geometrie der Reifen sowie des Trägers kann entweder ebenfalls über die Sensorik erfasst oder für die Durchführung des Verfahrens vorgegeben werden, da sie in der Regel vor dem Entladen bereits bekannt sind.

Bevor eine Recheneinheit die Sensordaten zur Auswertung verarbeitet und der Robotersteuerung die Bahndaten übermittelt, ist der genaue Greifpunkt festzulegen und zu prüfen, ob die zum Greifen des jeweiligen Reifens ermittelte Bewegungsbahn kollisionsfrei abgewickelt werden kann. Hierzu wird zunächst ein mit dem vorhandenen Greifwerkzeug zu greifender Reifen der vorher erfassten äußeren Reifen nach vorgebbaren Kriterien ausgewählt. Kriterien hierzu können bspw. die Qualität oder Güte der Reifenerkennung, die absolute Höhe des Reifens auf dem Träger oder die Anzahl der Überdeckungen durch andere Reifen sein. Für den nach den vorgegebenen Kriterien ausgewählten Reifen werden anschließend eine oder mehrere Bewegungsbahnen des Greifwerkzeugs zum Greifen und Depalettieren des Reifens berechnet. Die Bewegungsbahnen werden vorzugsweise für unterschiedliche, mit dem Greifwerkzeug mögliche Greifstellungen oder Greifarten ermittelt. Anschließend werden für die berechneten Bewegungsbahnen mögliche Kollisionen mit dem Träger und anderen Reifen ermittelt. Dies erfolgt auf Basis eines 3D-Modells des Greifwerkzeugs und des Trägers sowie von Sensordaten der Sensorik, aus denen die Lage der Reifen und, falls nicht bereits bekannt, auch des Trägers ableitbar ist. Die Ermittlung der möglichen Kollisionen kann in einer Reihenfolge der Bewegungsbahnen erfolgen, die durch vorgegebene Vorzugswerte festgelegt wird. Nachdem die erste Bewegungsbahn ohne Kollision in der Reihenfolge dieser Vorzugswerte ermittelt wurde, kann die weitere Berechnung abgebrochen werden. Das Greifwerkzeug wird dann automatisiert mit dem Roboter auf der berechneten Bewegungsbahn zu dem zum Greifen bestimmten Reifen geführt. Der Reifen wird mit dem Greifwerkzeug gegriffen, auf der berechneten Bewegungsbahn vom Träger entladen und an einer festgelegten Position abgelegt. Für den Fall, dass keine der für den Reifen berechneten Bewegungsbahnen kollisionsfrei möglich ist, wird ein neuer Reifen bestimmt, der den vorgebbaren Kriterien als nächstes entspricht. Die weiteren Schritte, d. h. das Berechnen der Bewegungsbahnen und die Kollisionsprüfung, werden dann für diesen Reifen durchgeführt. Diese Prozedur wird solange wiederholt, bis ein Reifen mit einer kollisionsfreien Bewegungsbahn ermittelt wurde, der dann in der oben angegebenen Weise entladen wird. Nach dem Entladen des Reifens wird die beschriebene Abfolge von Verfahrensschritten jeweils erneut durchgeführt, bis der Träger vollständig entladen ist.

Für die korrekte Arbeitsweise des Verfahrens sowie des zugehörigen Systems müssen weder das Stapelmuster der Reifen auf dem Träger noch die genaue Position des Trägers im Vorfeld bekannt sein. Die Reifen werden unabhängig von ihrer Lage auf dem Träger automatisch erkannt und entladen. Die Erfindung ermöglicht somit die vollautomatische Entladung auch von Transporteinheiten mit unterschiedlichen Reifentypen. Hierbei ist es jedoch von Vorteil, wenn die Geometrie der Reifen nicht erst durch die Sensorik erfasst werden muss, sondern bereits vorab bekannt ist und bereitgestellt wird. Sie beschleunigt die Erfassung der Position und Orientierung der Reifen und erhöht die Zuverlässigkeit. Das Gleiche gilt für die Geometrie des Trägers der Reifen.

Mit dem Verfahren können beliebig gestapelte bzw. orientierte Reifen unter Einsatz eines Industrieroboters mit einem Greifwerkzeug und eines Sensorsystems ohne Kollision mit der Umgebung von einem Träger entladen und teilgeordnet oder geordnet auf einer Ablagefläche abgelegt werden. Dabei ist es unerheblich, ob die Reifen auf dem Träger geordnet, teilgeordnet oder völlig ungeordnet vorliegen. Im Vergleich zum Stand der Technik entfällt durch das robotergestützte Depalettieren die körperlich harte und monotone Arbeit des Entladens, so dass die Gesundheit der Mitarbeiter geschont wird und auch Kosten eingespart werden. Darüber hinaus wird durch eine Automatisierung eine gleichbleibende Qualität und Ausbringung gewährleistet. Das Verfahren und das zugehörige System erfordern auch keine speziell ausgebildeten Behältnisse für den Transport bzw. die Bereitstellung der Reifen.

Das zugehörige Depalettiersystem umfasst einen mehrachsigen Industrieroboter, vorzugsweise einen 6-Achs-Knickarm-Roboter, ein Greifwerkzeug, einen 3D-Sensor, eine Bewegungsmechanik für den 3D-Sensor, bspw. in Form einer Linearachse, und eine Auswerte- oder Recheneinheit, die die Sensordaten sowie die evtl. vorgegebenen Geometriedaten der Reifen und des Trägers in der bei dem Verfahren angegebenen Weise auswertet und dem Industrieroboter die Bahndaten für die auszuführende Greifbewegung übermittelt. Bei dieser Auswerteeinheit kann es sich bspw. um einen Personalcomputer (PC) handeln, der mit dem Roboter und dem Sensor verbunden ist. Die Auswerteeinheit oder ein Teil der Auswerteinheit kann auch in die Steuereinheit des Industrieroboters implementiert sein.

Für die Durchführung des Verfahrens ist die Nutzung eines Greifwerkzeugs von Vorteil, das mehrere unterschiedliche Greifarten ausführen und damit in beliebiger Orientierung vorliegende Reifen greifen kann. Ein bevorzugtes Greifwerkzeug für diesen Einsatz umfasst zwei Greifbacken, von denen wenigstens ein Greifbacken gegen den anderen Greifbacken bewegt werden kann, sowie einen Antrieb, der die beiden Greifbacken zum Greifen eines Reifens gegeneinander oder auseinander bewegt. Die Greifbacken sind hierbei so ausgebildet, dass sie sich in die Öffnung eines Reifens einführen lassen. Hierbei können beide Greifbacken beweglich sein oder ein Greifbacken beweglich und der andere feststehend.

Mit einem derartig ausgestalteten Greifwerkzeug lassen sich Reifen durch Klemmung am Innenwulst in axialer Greifrichtung, durch Klemmung über die Reifenbreite in axialer Greifrichtung, durch Klemmung über die Reifenhöhe in radialer Greifrichtung, durch Klemmung über den Felgenmaul-Innenbereich in axialer Greifrichtung oder durch Klemmung am Innenwulst in radialer Greifrichtung greifen.

Die Greifbacken können bei dem vorgeschlagenen Greifwerkzeug translatorisch oder rotatorisch zueinander bewegt werden und sind hierzu entsprechend geführt. Der Antrieb kann bspw. elektrischer, pneumatischer oder hydraulischer Art sein. Vorzugsweise ist zusätzlich eine Steuerung für den Antrieb vorgesehen, die die Greifkraft bzw. Klemmkraft erfasst und regelt, um Beschädigungen an den Reifen zu vermeiden. Dies kann in einer Ausgestaltung durch separate Sensoren am Greifer direkt erfolgen, bspw. durch Dehnungsmessstreifen, Druckschalter usw. In einer anderen Ausgestaltung kann die Erfassung der Greifkraft je nach Antriebsart auch durch Messung des Motorstroms bei elektrischem Antrieb oder durch Messung des Drucks bei einem pneumatischen oder hydraulischen Antrieb erfolgen.

Zur Vermeidung des Abrutschens der Reifen können eine oder beide Greifbacken zusätzlich mit einem Steg oder Absatz oder mit einem die Friktion erhöhenden Bezug oder einer entsprechenden Beschichtung, bspw. aus Gummi, versehen sein.

In einer bevorzugten Ausgestaltung ist das vorgeschlagene Depalettiersystem so ausgebildet, dass es neben dem Depalettieren auch zum Palettieren von Reifen eingesetzt werden kann. Dies erfordert die Implementierung eines Moduls, das die entsprechenden Bahndaten für die Palettierung berechnet und dem Roboter übermittelt. Das hierfür vorzugsweise eingesetzte Verfahren ist in der DE 10 2005 053 296 A1 eingehend beschrieben, dessen Offenbarungsgehalt hiermit vollumfänglich in die vorliegende Patentanmeldung einbezogen wird. Bei diesem Verfahren zum automatisierten Stapeln von Reifen auf einem Träger werden zunächst Geometriedaten der Reifen und/oder ein digitales Reifenmodell der Reifen bereitgestellt oder erzeugt. Bei diesen Geömetriedaten handelt es sich um Daten wie Außendurchmesser, Innendurchmesser und Reifenbreite sowie eventuell die Felgenmaulbreite. Auch ein digitales Reifenmodell der Reifen kann bereitgestellt oder aus den Geometriedaten automatisch erzeugt werden. Umgekehrt können die Geometriedaten auch automatisch aus einem digitalen Reifenmodell abgeleitet werden. Auf Basis der Geometriedaten und/oder des Reifenmodells und einer vorgebbaren Größe des Trägers berechnet ein Programm bzw. Algorithmus ein Stapelmuster für die Reifen auf dem Träger, das eine stabile Lagerung einer möglichst großen Anzahl der Reifen auf dem Träger ermöglicht. Vorzugsweise berechnet der Algorithmus ein Rick-Rack Muster oder ein vertikales Muster. In einer besonderen Ausgestaltung kann der Benutzer den Stapelmustertyp vorgeben oder aus einer vorgegebenen Auswahl auswählen. Nach der Offline-Berechnung des Stapelmusters für Reifen der bereitgestellten Geometriedaten oder des bereitgestellten Reifenmodells werden automatisch die Positionsdaten der Reifen aus dem Stapelmuster übernommen sowie zugehörige Bewegungsbahnen des Greifwerkzeugs für die Stapelung der Reifen gemäß dem Stapelmuster generiert und abgespeichert. Unter den Positionsdaten sind hierbei Daten des Ortes sowie der Orientierung der Reifen zu verstehen. Vorzugsweise erfolgt die Berechnung der Stapelmuster vorab bereits für mehrere unterschiedliche Reifengrößen bzw. Reifentypen, die später gestapelt werden sollen. Zu jedem Reifentyp werden hierbei die entsprechenden Positionsdaten und Bewegungsbahnen zusammen mit einer Identifikationsinformation des Reifentyps in einer Datenbank abgespeichert. Bei der Berechnung der Stapelmuster und Generierung der Bewegungsbahnen wird auch eine Kollisionsprüfung auf Basis des digitalen Reifenmodells durchgeführt, um die spätere automatische Stapelung ohne Kollisionen und somit ohne weitere Eingriffe oder Korrekturen zu ermöglichen. Bei der Stapelung der Reifen werden dann die gespeicherten Positionsdaten und zugehörigen Bewegungsbahnen abgerufen und dem Roboter übergeben, der die Reifen an der vorgegebenen Aufnahmeposition aufnimmt und entsprechend den Positionsdaten und zugehörigen Bewegungsbahnen auf dem Träger ablegt. Bei Nutzung einer Datenbank mit mehreren Reifentypen werden dabei zunächst die zu stapelnden Reifen identifiziert und anschließend die diesen Reifen zugeordneten Positionsdaten und Bewegungsbahnen anhand der abgespeicherten Identifikationsinformation abgerufen.

Für die Ausgestaltung eines kombinierten Palettier- und Depalettiersystems ist vor allem ein Greifwerkzeug von Vorteil, das eine Klemmung am Innenwulst in radialer Richtung ermöglicht. Bei diesem Greifprinzip werden die Reifen automatisch zentriert und ausgerichtet, wodurch das Palettieren aufgrund der definierten Orientierung der Reifen am Greifwerkzeug vereinfacht wird. Mit einem derartigen kombinierten Palettier- und Depalettiersystem ist es möglich, die Reifen nach dem Depalettieren von einem Träger mit dem gleichen System auch wiederum auf einem anderen Träger zu palettieren.

### Kurze Beschreibung der Zeichnungen

Das vorgeschlagene Verfahren zum Depalettieren von Reifen sowie das zugehörige Depalettiersystem und das dabei eingesetzte Greifwerkzeug werden nachfolgend anhand eines Ausführungsbeispiels in Verbindung mit den Zeichnungen ohne Beschränkung des durch die Patentansprüche vorgegebenen Schutzbereichs nochmals näher erläutert. Hierbei zeigen:
- Fig. 1: ein Beispiel für einen mit dem Depalettiersystem zu entladenden Träger mit darauf gestapelten Reifen;
- Fig. 2: ein Beispiel für das zur vorgeschlagene Depalettiersystem in schematischer Darstellung;
- Fig. 3: ein beispielhaftes Ablaufdiagramm für die Durchführung des vorgeschlagenen Verfahrens;
- Fig. 4: ein Beispiel für ein Greifwerkzeug, das beim vorgeschlagenen Verfahren zum Einsatz kommt; und
- Fig. 5: verschiedene Greifarten, wie sie mit dem Greifwerkzeug der Figur 4 ausführbar sind.

### Wege zur Ausführung der Erfindung

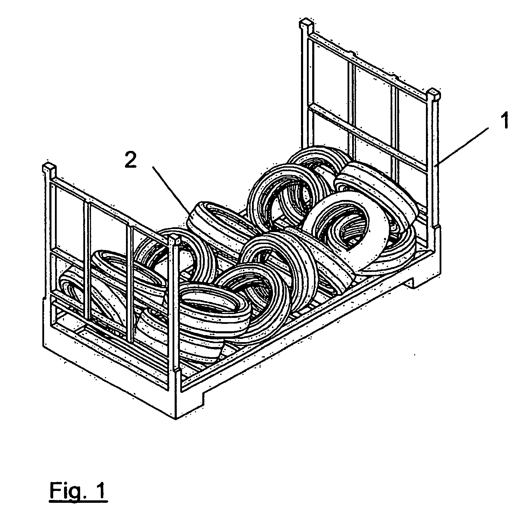

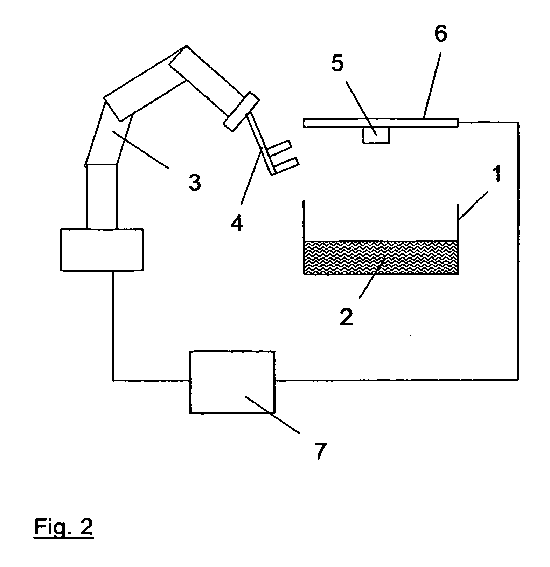

Das vorgeschlagene Verfahren und das zugehörige Depalettiersystem ermöglichen das automatische Entladen von Reifen, die auf einer Transporteinheit gestapelt sind, mit einem Roboter, insbesondere einem 6-Achs-Knickarmroboter. Figur 1 zeigt hierzu ein Beispiel für eine Transporteinheit 1, auf der mehrere Reifen 2 im vorliegenden Fall ungeordnet gestapelt sind. Eine derartige Transporteinheit 1 wird in der Regel mit einem Flurfördergerät, bspw. einem Gabelstapler oder einem Hubwagen, im Entladebereich abgesetzt. Beim vorgeschlagenen Verfahren wird eine derartige Transporteinheit 1 mit einem Depalettiersystem entladen, wie es beispielhaft in der Figur 2 dargestellt ist.

Figur 2 zeigt ein beispielhaftes Depalettiersystem gemäß der vorliegenden Erfindung in stark schematisierter Darstellung. Das Depalettiersystem umfasst einen 6-Achs-Knickarmroboter 3 mit einem Greifer 4, der über einen Anschlussflansch am Arm des Knickarm-Roboters 3 angekoppelt ist. Über dem Entladebereich, in dem die Transporteinheit 1 mit den Reifen 2 abgesetzt wird, ist eine Linearachse 6 angeordnet, die einen 3D-Sensor 5 trägt. Der 3D-Sensor 5 wird entlang der Linearachse über der Transporteinheit 1 verfahren, um eine Oberflächentopographie der Transporteinheit 1 mit den drauf befindlichen Reifen 2 aufzunehmen. Eine mit dem 3D-Sensor verbundene Auswerteeinheit 7, im vorliegenden Beispiel ein PC, wertet die Sensordaten entsprechend dem vorgeschlagenen Verfahren aus und übermittelt die Bahndaten zum Greifen des jeweiligen Reifens an den Knickarm-Roboter 3. Auf diese Weise werden die Reifen 2 nacheinander von der Transporteinheit 1 entladen und an einer in Figur 2 nicht dargestellten Position abgelegt. Diese Position muss selbstverständlich im Arbeitsbereich des Knickarm-Roboters 3 liegen. Die Reifen 2 können hierbei in ungeordneter oder geordneter Weise abgelegt werden. Insbesondere können die Reifen auch direkt auf eine weitere Transporteinheit aufgeladen werden, bspw. in einem Rick-Rack-Muster oder einem vertikalen Muster, wie dies in der DE 10 2005 053 296 A1 näher beschrieben ist. Die Auswerteeinheit 7 muss hierbei lediglich über ein entsprechendes Modul zur Generierung der Bahndaten gemäß dieser Veröffentlichung verfügen. Weiterhin ist es bei Nutzung dieses Palettierverfahrens auch möglich, die Reifen zunächst von der Transporteinheit 1 zu entladen und auf einer dafür vorgesehenen Fläche abzulegen und zu einem späteren Zeitpunkt wieder auf einen leeren, bereitgestellten Träger zu palettieren.

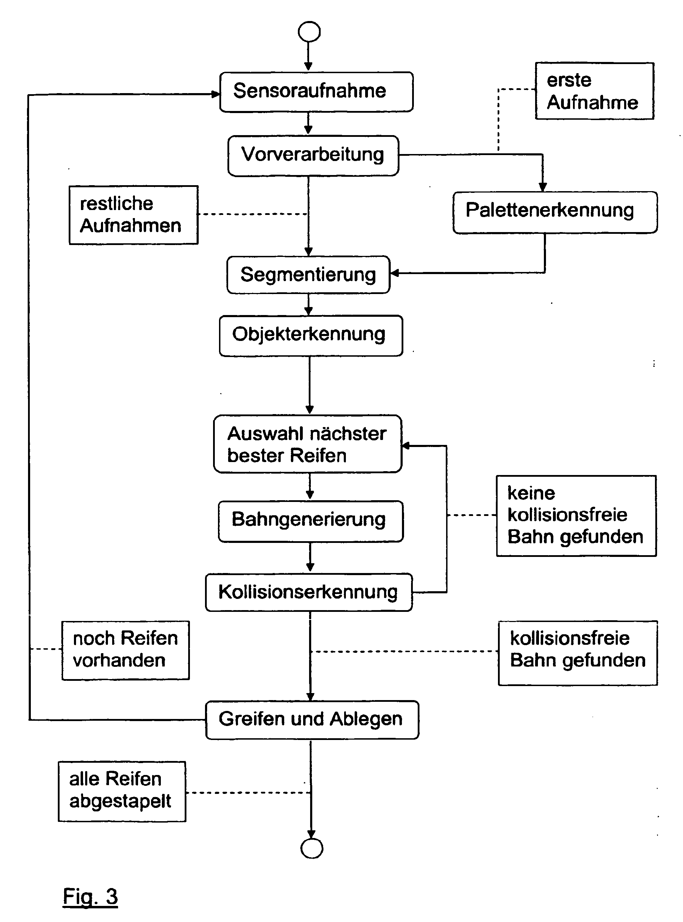

Beispielhafte Verfahrensschritte zum Entladen der Reifen 2 von der Transporteinheit 1 gemäß einer Ausgestaltung des vorgeschlagenen Verfahrens werden anhand des Ablaufdiagramms der Figur 3 erläutert. Hierzu ist in der Auswerteeinheit 7 ein Algorithmus implementiert, der die Linearachse 6 zur Bewegung des 3D-Sensors über die Transporteinheit 1 ansteuert, die vom 3D-Sensor gelieferten Sensordaten auswertet und die entsprechenden Bahndaten generiert und an den Knickarm-Roboter 3 zur Ausführung der Greif- und Entladebewegung übermittelt. Die einzelnen, durch die Auswerteeinheit 7 ausgeführten oder veranlassten Schritte sind:
1) Der berührungslos arbeitende 3D-Sensor 5 wird linear über die Transporteinheit 1 mit den Reifen 2 bewegt, wodurch im vorliegenden Beispiel eine dreidimensionale Punktewolke generiert wird. Alternativ kann die Bewegung des Sensors auch durch Rotation um eine Achse vorgenommen werden.
2) Die Sensordaten (Punktewolke) werden aufbereitet und segmentiert. Unter Segmentierung versteht man das Zusammenfassen von Punkten mit Ähnlichkeitscharakter zum Auffinden von Objekten. Die Reifensegmente werden dann ausgewählt und zu Reifenobjekten zusammengestellt.
3) Mit Hilfe eines Verfahrens zur Fehlerminimierung (sog. "least squares") werden die Reifen erkannt und ihre Position, Orientierung und geometrischen Abmessungen bestimmt. Sind die Abmessungen der Reifen im Vorfeld bekannt, so kann die Genauigkeit der Erkennung erhöht werden.
4) Die erkannten Reifen werden hinsichtlich bestimmter Kriterien sortiert, so dass der erste zu greifende Reifen bestimmt werden kann. Kriterien hierzu sind bspw. die Qualität/Güte der Reifenerkennung, die absolute Höhe des Reifens in der Transporteinheit und die Anzahl der Überdeckungen durch andere Reifen.
5) Für das Greifen und Ablegen des ersten zu greifenden Reifens werden dann die Bahndaten generiert. Dazu werden im Vorfeld relativ zum Reifen bestimmte Greifpositionen konfiguriert, die mit unterschiedlichen Vorzugswerten versehen werden. Im Vorfeld wird somit festgelegt, welche Griffe mit dem Greifer an diesem Reifen möglich sind. Die genaue Greifposition (6D-Daten) errechnet sich aus der jeweiligen Position des Reifens innerhalb des Stapels. Bei der genauen Greifposition wird auch das Umfeld mitberücksichtigt. Wenn ein anderer Reifen vor dem zu greifenden Reifen liegt, kann von dieser Position der Greifer nicht auf den Reifen gefahren werden. Sind zwei Reifen ineinander verschränkt (ein Reifen durchdringt den Anderen), so wird dieses erkannt und die Greifposition und die Einfahrposition dementsprechend korrigiert. Zu einem Reifen werden jeweils nur eine mögliche (eine optimale) oder mehrere Bahnen generiert.
6) Sind der erste zu greifende Reifen und dessen Bahndaten bekannt, werden die generierten Bahnen in der Reihenfolge ihrer Vorzugswerte auf Kollisionen hin überprüft. Dabei werden sowohl Kollisionen des Greifers 4 mit der Transporteinheit 1 als auch mit anderen Reifen überprüft. Für die Kollisionserkennung werden ein CAD-Modell des Greifers 4 und ein CAD-Modell der Transporteinheit 1 eingesetzt. Die Kollisionserkennung mit den umliegenden Reifen erfolgt aufgrund der tatsächlichen Sensordaten. Liegt eine Kollision vor, so wird die nächste Bahn überprüft. Wird keine kollisionsfreie Bahn gefunden, wird der nächste Reifen überprüft, der die obigen Kriterien erfüllt. Dies wird solange wiederholt, bis eine kollisionsfreie Bahn gefunden wurde oder ein vorgebbares Abbruchkriterium eintritt.
7) Die gefundene Bahn wird in das Roboterkoordinatensystem transformiert und an die Robotersteuerung gesendet.
8) Der Roboter mit aufgesetztem Greifer fährt die Bahnpunkte ab, greift somit den Reifen und legt ihn auf die vorgesehene Ablagefläche ab.

Grundsätzlich könnten mit einer Sensoraufnahme mehrere Reifen abgestapelt werden. Allerdings ist nicht gewährleistet, dass sich aufgrund der Entnahme eines Reifens die anderen Reifen nicht bewegen. Nach der Entnahme eines Reifens wird also eine erneute Aufnahme mit dem 3D-Sensor gemacht und der obige Algorithmus beginnt von neuem. Der Algorithmus endet, wenn alle Reifen von der Transporteinheit 1 abgestapelt wurden.

Für die Kollisionsüberprüfung des Greifers mit dem Ladungsträger reicht es nicht aus, sich darauf zu verlassen, dass der Ladungsträger mit dem Sensor erfasst wurde. Einerseits liefert der Sensor aufgrund der Oberflächenbeschaffenheit des Ladungsträgers möglicherweise hier keine verlässlichen Daten, andererseits können sich Teile des Ladungsträgers im so genannten Verschattungsbereich des Sensors befinden, so dass der Ladungsträger für den Sensor nicht komplett sichtbar ist, sondern von sich selbst oder durch andere Objekte verdeckt wird.

Um eine in allen Fällen korrekte Kollisionsüberprüfung zu gewährleisten, wird deshalb im vorliegenden Beispiel ein CAD-Modell des Ladungsträgers verwendet. Somit ist - auch in Verschattungsbereichen - die geometrische Form des Ladungsträgers bekannt und es müssen nur noch die korrekte Position und Orientierung des Ladungsträgers bestimmt werden.

Das Absetzen einer Transporteinheit mit einem Flurfördergerät ist meist mit einem gewissen Fehler behaftet. Eine feste Vorgabe einer Abstellposition für die Transporteinheit würde daher zu einem nicht mehr tolerierbarer Fehler bei der Kollisionserkennung führen, da Simulation und Realität nicht mehr übereinstimmen, oder es müsste ein erhöhter Aufwand in eine Zentriervorrichtung für den Ladungsträger gesteckt werden. Das vorgeschlagene Verfahren wurde daher so ausgestaltet, dass auf eine feste Vorgabe der Abstellposition verzichtet werden kann.

Position und Orientierung des Ladungsträgers werden vorzugsweise aus den Sensordaten automatisch bestimmt, die durch eine Aufnahme der vollen Transporteinheit erhalten werden. Dazu muss sich die Transporteinheit innerhalb des Erfassungsbereichs des jeweiligen Sensorsystems liegen.

Der im vorliegenden Beispiel zur Erkennung der Lage der Transporteinheit eingesetzte Algorithmus arbeitet wie folgt:
1) Aufbereitung und Segmentierung der mit dem 3D-Sensor aufgezeichneten Punktewolke, wie weiter oben bereits erläutert.
2) Das Segment mit den Daten, die der Transporteinheit mit den darauf befindlichen Objekten entsprechen, wird auf den Boden projiziert.
3) Die Punktedichte in der Projektion wird zur schnelleren Weiterverarbeitung reduziert, ohne jedoch die konvexe Hülle der Punkte stark zu verändern.
4) Die resultierende Punktewolke A wird kopiert (Punktewolke B). Punktewolke B wird senkrecht zur Ebene der Punktewolke B verschoben.
5) Es wird die Boundingbox der beiden Punktewolken A und B berechnet. Daraus ergibt sich die Position der Transporteinheit.

Die zuverlässige Durchführung des Verfahrens erfordert ein Greifwerkzeug, das eine flexible Aufnahme von Reifen ermöglicht. Unter einer flexiblen Aufnahme wird hierbei verstanden, dass die Reifen mit dem Greifwerkzeug in unterschiedlicher Weise gegriffen werden können, um den unterschiedlichen Positionen und Orientierungen der Reifen auf dem Ladungsträger Rechnung zu tragen. Mit dem im Folgenden beschriebenen Greifwerkzeug lassen sich Reifen sehr flexibel und je nach Bedarf auf unterschiedliche Arten greifen.

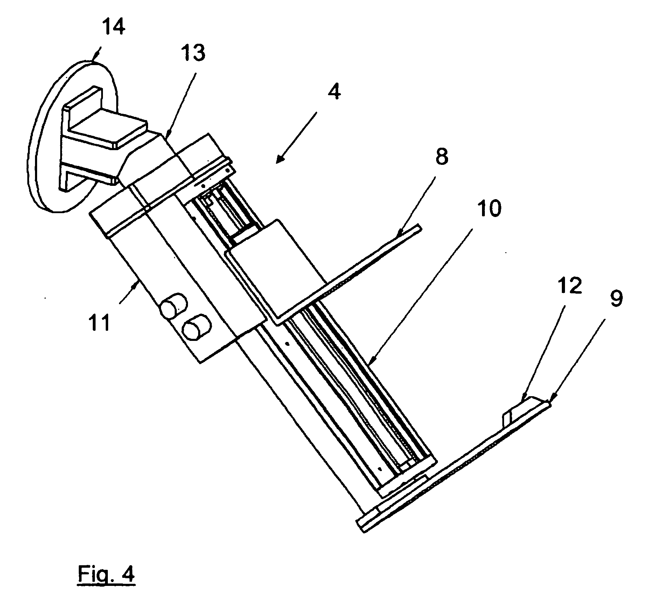

Das Greifwerkzeug der Figur 4 stellt im Wesentlichen einen Backengreifer dar, der zum Greifen eines Reifens entweder zwei bewegliche Greifbacken oder, wie im Beispiel der Figur 4, eine bewegliche Greifbacke 8 und eine feststehende Greifbacke 9 aufweist. Die Greifbacken können hierbei translatorisch, wie im vorliegenden Beispiel, oder auch rotatorisch zueinander bewegt werden und sind hierzu entsprechend geführt. Figur 4 zeigt eine Führung 10 für die Ausführung einer translatorischen Bewegung der Greifbacke 8. Der Antrieb 11 des Greifwerkzeugs kann elektrischer, pneumatischer oder hydraulischer Art sein.

Im vorliegenden Beispiel ist die feststehende Greifbacke 9 mit einem Absatz 12 ausgeprägt, um das Abrutschen der Reifen zu verhindern. Weiterhin können die Greifbacken zur Erhöhung der Friktion beschichtet sein.

Das Greifwerkzeug 4 wird mit einer Flanschplatte 13 am Roboterarm befestigt. Das Greifwerkzeug weist dabei einen Winkelversatz zwischen dem Befestigungsrohr 14, das entlang der Längsachse des Greifwerkzeugs ausgerichtet ist, und der Flanschplatte 13 und damit zum Roboterarm auf. Dieser Winkelversatz kann auch einstellbar ausgestaltet sein, um Kollisionen zwischen Roboter/ Greifer und Transporteinheit/Reifen bei unterschiedlichen Anfahrstrategien insbesondere an den Seitenwänden der Transporteinheit zu verhindern.

Um Beschädigungen an den Reifen zu vermeiden, sollte die Greifkraft bzw. Klemmkraft entsprechend erfasst und geregelt werden. Dies kann durch separate Sensoren am Greifer direkt geschehen oder, je nach Antriebsart, auch durch Messung des Motorstroms bei elektrischem Antrieb oder des Drucks bei pneumatischem oder hydraulischem Antrieb. Die hierfür erforderliche Steuerung ist in der Antriebseinheit implementiert.

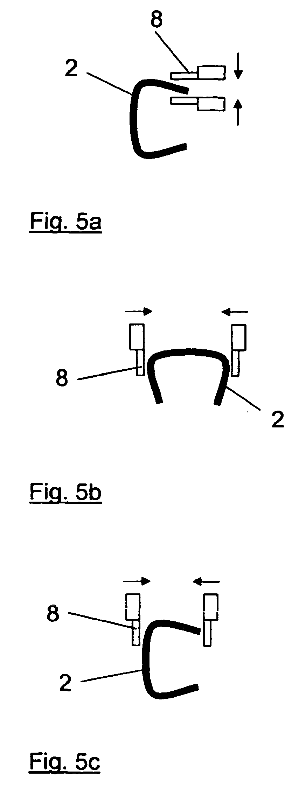

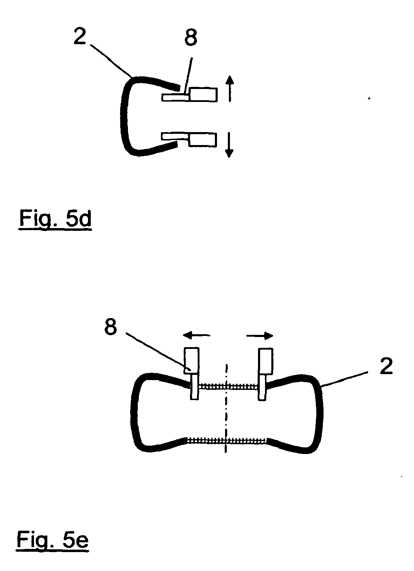

Mit Hilfe dieses Greifwerkzeugs ist es möglich, einen Reifen auf verschiedene Arten zu greifen, wie sie in Figur 5 schematisch dargestellt sind. Die Figur 5 zeigt hierzu einen Schnitt durch eine Seite eines Reifens 2 sowie die beiden Greifbacken 8, 9 des Greifwerkzeugs. Die Greifbewegung selbst ist durch die Pfeile angedeutet.

Figur 5a zeigt hierzu eine Klemmung an einem Innenwulst des Reifens in axialer Richtung. Die Greifbacken können hierbei auch nach oben oder nach unten ausgerichtet sein, je nach Lage des Reifens. Figur 5b zeigt eine Klemmung des Reifens axial über die Reifenbreite. In Figur 5c ist das Klemmen des Reifens über die Reifenhöhe angedeutet. Figur 5d zeigt die Klemmung des Reifens über dem Felgenmaul-Innenbereich. Figur 5d zeigt schließlich eine Klemmung eines Reifens 2, hier in vollständiger Schnittansicht, am Innenwulst in radialer Richtung. Diese Greifart ist besonders vorteilhaft für eine anschließende Palettierung des Reifens, da die Reifen bei dieser Greifart automatisch zentriert und ausgerichtet werden.

Selbstverständlich sind auch Abwandlungen der Geometrie des Greifwerkzeugs möglich, um einen Greifer für Reifen mit unterschiedlichen Greifarten bereitzustellen.

### Bezugszeichenliste

- 1: Transporteinheit
- 2: Reifen
- 3: 6-Achs-Knickarm-Roboter
- 4: Greifwerkzeug
- 5: 3D-Sensor
- 6: Linearachse
- 7: Auswerteeinheit
- 8: verschiebbare Greifbacke
- 9: feststehende Greifbacke
- 10: Führung
- 11: Antrieb
- 12: Absatz
- 13: Flanschplatte
- 14: Befestigungsrohr mit Winkelversatz zur Flanschplatte

## Patentansprüche

1. Verfahren zum Roboter geführten Depalettieren von Reifen (2), die auf einem Träger (1) abgelegt sind, bei dem wiederholt folgende Abfolge von Schritten durchgeführt wird:
- Erfassen von Position und Orientierung äußerer Reifen (2) mit einer Sensorik (5);
- Bestimmen eines mit einem Greifwerkzeug (4) zu greifenden Reifens der äußeren Reifen (2) nach vorgebbaren Kriterien;
- Berechnen von Bewegungsbahnen des Greifwerkzeugs (4) zum Greifen und Depalettieren des zum Greifen bestimmten Reifens für unterschiedliche Greifstellungen des Greifwerkzeugs (4);
- Prüfen auf mögliche Kollisionen mit dem Träger (1) und anderen Reifen für die berechneten Bewegungsbahnen auf Basis eines 3D-Modells des Greifwerkzeugs (4), des Reifens und des Trägers (1) sowie von Sensordaten der Sensorik (5);
- Festlegung einer der berechneten Bewegungsbahnen, für die keine Kollision ermittelt wird, oder, falls keine Bewegungsbahn ohne Kollision ermittelt wird, Bestimmen eines anderen zu greifenden Reifens und Wiederholung der letzten Schritte bis ein Reifen ermittelt wird, für den eine Bewegungsbahn ohne Kollision festgelegt werden kann;
- Führen des Greifwerkzeug (4) mit einem Industrieroboter zu dem zum Greifen bestimmten Reifen, Greifen des Reifens mit dem Greifwerkzeug (4) und Führung des Greifwerkzeugs (4) mit dem Reifen auf der festgelegten Bewegungsbahn, um den Reifen an einer festgelegten Position abzulegen.

2. Verfahren nach Anspruch 1, bei dem mit der Sensorik (5) auch Position und Orientierung des Trägers (1) erfasst werden.

3. Verfahren nach Anspruch 1 oder 2, bei dem das Erfassen von Position und Orientierung der äußeren Reifen (2) und/oder des Trägers (1) in folgenden Schritten erfolgt:
- Erfassen einer Oberflächentopographie des Trägers (1) mit den Reifen (2) mit der Sensorik (5) ;
- Ermitteln der Position und Orientierung der äußeren Reifen (2) und/oder der Position und Orientierung des Trägers (1) mit einem Erkennungsalgorithmus aus der Oberflächentopographie.

4. Verfahren nach einem der Ansprüche 1 bis 3, bei dem die Geometrie des Trägers (1) und/oder der Reifen (2) vorgegeben wird.

5. Verfahren nach einem der Ansprüche 1 bis 4, bei dem die Kriterien für die Bestimmung eines mit einem Greifwerkzeug (4) zu greifenden Reifens eine Höhe des Reifens auf dem Träger (1) und/oder ein Uberdeckungsgrad des Reifens mit anderen Reifen und/oder eine Zuverlässigkeit der Erkennung des Reifens umfassen.

6. Verfahren nach einem der Ansprüche 1 bis 5 bei dem ein Greifwerkzeug (4) eingesetzt wird, das unterschiedliche Greifarten für die Reifen (2) ermöglicht.

7. Verfahren nach Anspruch 6, bei dem ein Greifwerkzeug (4) mit mindestens zwei gegeneinander oder auseinander beweglichen Greifbacken (8, 9) eingesetzt wird, die sich in die Öffnung der Reifen (2) einführen lassen; oder Bei dem ein Greifwerkzeug (4) mit einer beweglichen (8) und einer feststehenden Greifbacke (9) eingesetzt wird; wobei sich die bewegliche Greifbacke (8) gegen die feststehenden Greifbacke (9) oder von dieser weg bewegen lässt und sich die Greifbacken (8, 9) in die Öffnung der Reifen (2) einführen lassen.

8. Verfahren nach einem der Ansprüche 1 bis 7, bei dem als Industrieroboter ein Knickarm-Roboter (3) eingesetzt wird, und/oder bei dem die Sensorik (5) für die Erfassung von Position und Orientierung äußerer Reifen (2) über den Träger (1) mit den Reifen (2) bewegt wird.

9. Depalettiersystem für die Durchführung des Verfahrens nach einem der vorangehenden Patentansprüche, das wenigstens einen Industrieroboter mit einem Greifwerkzeug (4), eine 3D-Sensorik (5) mit einer Bewegungsmechanik (6) zur Erfassung von Position und Orientierung äußerer Reifen (2) auf einem Träger (1) und eine Auswerteeinheit (7) umfasst, **dadurch gekennzeichnet dass** die Auswerteeinheit (7) für die Durchführung der Bestimmungs-, Berechnungs-, Prüfungs- und Festlegungsschritte des Verfahrens nach Anspruch 1 programmiert und ausgebildet ist.

10. Depalettiersystem nach Anspruch 9, bei dem
- der Industrieroboter ein Knickarm-Roboter (3) ist, und/oder
- die Bewegungsmechanik (6) der 3D-Sensorik eine Linearachse ist.

11. Depalettiersystem nach Anspruch 9 oder 10, bei dem das Greifwerkzeug (4) mindestens zwei Greifbacken (8, 9) umfasst, von denen wenigstens eine Greifbacke (8) gegen die andere Greifbacke (9) oder von dieser weg bewegt werden kann, und einen Antrieb, der die beiden Greifbacken (8, 9) zum Greifen eines Reifens gegeneinander oder auseinander bewegt, wobei die Greifbacken (8, 9) so ausgebildet sind, dass sie sich in die Öffnung des Reifens einführen lassen.

12. Depalettiersystem nach Anspruch 11, bei dem eine Steuerung für den Antrieb vorgesehen ist, die eine Andruckkraft der Greifbacken (8, 9) beim Greifen regelt.

13. Depalettiersystem nach einem der Ansprüche 9 bis 12, bei dem
- zumindest eine der Greifbacken (8, 9) an einer Innenseite und/oder Außenseite, die beim Greifen am Reifen anliegt, einen Absatz (12) oder Steg aufweist, der ein Abrutschen des Reifens verhindert, und/oder
- zumindest eine der Greifbacken (8, 9) an einer Innenseite und/oder Außenseite, die beim Greifen am Reifen anliegt, einen Bezug oder eine Beschichtung zur Erhöhung der Friktion aufweist, und/oder
- eine oder beide Greifbacken (8, 9) translatorisch oder rotatorisch gegeneinander bewegbar sind.

14. Depalettiersystem nach einem der Ansprüche 9 bis 13, bei dem das Greifwerkzeug (4) eine Flanschplatte (13) zur Ankopplung an den Industrieroboter aufweist, die mit ihrer Flächennormale unter einem Winkel ungleich 0° zu einer Längsachse der Greifwerkzeugs (4) steht oder einstellbar ist.

15. Depalettiersystem nach einem der Ansprüche 9 bis 14, bei dem die Auswerteeinheit (7) zusätzlich ein Modul umfasst, das für eine Berechnung von Bewegungsbahnen für eine erneute Palettierung der Reifen (2) auf einem anderen Träger ausgebildet ist.

## Claims

1. Method for the robot-guided depalleting of tyres (2) that are placed on a carrier (1), in which the following sequence of steps is carried out repeatedly:
- establishing the position and orientation of outer tyres (2) by means of a sensor (5);
- specifying one tyre of the outer tyres (2) to be picked up by a gripping tool (4) according to prespecifiable criteria;
- calculating movement paths of the gripping tool (4) for gripping and depalleting the tyre specified for picking up for different gripping positions of the gripping tool (4);
- testing for possible collisions with the carrier (1) and other tyres of the calculated movement paths on the basis of a 3D model of the gripping tool (4), the tyre and the carrier (1) as well as sensor data from the sensor (5);
- defining one of the calculated movement paths for which no collision is established, or, if no movement path has been established without collision, specifying a different tyre to be picked up and repeating the latter steps until a tyre is identified for which a movement path can be determined without collision;
- guiding the gripping tool (4) with an industrial robot to the tyre specified for picking up, gripping the tyre with the gripping tool (4) and guiding the gripping tool (4) with the tyre on the defined movement path in order to place the tyre in a defined position.

2. Method according to claim 1, in which the position and orientation of the carrier (1) are also determined by means of the sensor (5).

3. Method according to claim 1 or 2, in which the position and orientation of the outer tyres (2) and/or the carrier (1) are established in the following steps:
- establishing a surface topography of the carrier (1) with the tyres (2) by means of the sensor (5);
- determining the position and orientation of the outer tyres (2) and/or the position and orientation of the carrier (1) by means of a recognition algorithm from the surface topography.

4. Method according to any one of claims 1 to 3, in which the geometry of the carrier (1) and/or the tyres (2) is predefined.

5. Method according to any one of claims 1 to 4, in which the criteria for determining a tyre to be picked up by a gripping tool (4) comprise the height of the tyre on the carrier (1) and/or the coverage of the tyre by other tyres and/or the reliability of the identification of the tyre.

6. Method according to any one of claims 1 to 5, in which a gripping tool (4) is used which enables different ways of gripping the tyres (2).

7. Method according to claim 6, in which a gripping tool (4) with at least two gripping jaws (8, 9) that can move towards one another or apart from one another is used, which can be introduced into the opening of the tyres (2); or in which a gripping tool (4) with one movable (8) and one fixed gripping jaw (9) is used, wherein the movable gripping jaw (8) can be moved towards the fixed gripping jaw (9) or away from the latter and the gripping jaws (8, 9) can be introduced into the opening of the tyres (2)

8. Method according to any one of claims 1 to 7, in which an articulated arm robot (3) is used as the industrial robot and/or in which the sensor (5) for detecting the position and orientation of outer tyres (2) is moved over the carrier (1) with the tyres (2).

9. Depalleting system for performing the method according to any one of the preceding claims which comprises at least one industrial robot with a gripping tool (4), a 3D sensor (5) with movement mechanics (6) for detecting the position and orientation of outer tyres (2) on a carrier (1) and an evaluation unit (7), **characterised in that** the evaluation unit (7) is programmed and configured for implementing the specification, calculation, testing and defining steps of the method according to claim 1.

10. Depalleting system according to claim 9, in which
- the industrial robot is an articulated arm robot (3) and/or
- the movement mechanics (6) of the 3D sensor is a linear axis.

11. Depalleting system according to claim 9 or 10, in which the gripping tool (4) comprises at least two gripping jaws (8, 9), of which at least one gripping jaw (8) can be moved towards the other gripping jaw (9) or away from the latter, and a drive which moves the two gripping jaws (8, 9) for gripping a tyre towards one another or apart from one another, wherein the gripping jaws (8, 9) are configured so that they can be inserted into the opening of the tyre.

12. Depalleting system according to claim 11, in which a control is provided for the drive which controls a pressing force of the gripping jaws (8, 9) during the gripping process.

13. Depalleting system according to any one of claims 9 to 12, in which
- at least one of the gripping jaws (8, 9) on an inner side and/or outer side, which bears against the tyre when in gripping position, has a step (12) or web which prevents the tyre from sliding and/or
- at least one of the gripping jaws (8, 9) on an inner side and/or outer side, which bears against the tyre when in gripping position, has a cover or coating for increasing the friction, and/or
- one or both gripping jaws (8, 9) can be moved towards one another translationally or rotationally.

14. Depalleting system according to any one of claims 9 to 13, in which the gripping tool (4) comprises a flange plate (13) for coupling with the industrial robot, which flange plate with its surface normal is positioned at or can be adjusted to an angle different from 0° relative to a longitudinal axis of the gripping tool (4).

15. Depalleting system according to any one of claims 9 to 14, in which the evaluation unit (7) also comprises a module, which is designed for calculating movement paths for re-palleting the tyres (2) on a different carrier.

## Revendications

1. Procédé de dépalettisation de pneus (2) guidée par robot, lesquels sont déposés sur un support (1), dans lequel l'ordre d'étapes suivant est exécuté de manière répétée :
- détection de la position et de l'orientation de pneus (2) extérieurs au moyen d'un système de capteurs (5) ;
- détermination, selon des critères prédéterminables, d'un pneu à saisir parmi les pneus (2) extérieurs ;
- calcul de trajectoires de l'outil de préhension (4) pour saisir et dépalettiser le pneu destiné à être saisi pour différentes positions de préhension de l'outil de préhension (4) ;
- contrôle de collisions possibles avec le support (1) et d'autres pneus pour les trajectoires calculées sur la base d'un modèle à trois dimensions de l'outil de préhension (4), du pneu et du support (1) ainsi que sur la base de données de capteur du système de capteurs (5) ;
- spécification d'une des trajectoires calculées pour lesquelles aucune collision n'est détectée ou, dans le cas où aucune trajectoire sans collision ne serait détectée, détermination d'un autre pneu à saisir et répétition des dernières étapes jusqu'à ce qu'un pneu soit détecté, pour lequel une trajectoire sans collision puisse être spécifiée ;
- guidage de l'outil de préhension (4) par un robot industriel jusqu'au pneu destiné à être saisi, préhension du pneu avec l'outil de préhension (4) et guider l'outil de préhension (4) avec le pneu sur la trajectoire établie pour déposer le pneu à une position spécifiée.

2. Procédé selon la revendication 1 dans lequel la position et l'orientation du support (1) sont aussi détectées au moyen du système de capteurs (5).

3. Procédé selon la revendication 1 ou 2, dans lequel la détection de la position et de l'orientation des pneus (2) extérieurs et/ou du support (1) est effectuée dans les étapes suivantes
- détection d'une topographie de surface du support (1) avec les pneus (2) au moyen du système de capteurs (5) ;
- détermination de la position et de l'orientation des pneus extérieurs (2) et/ou de la position et de l'orientation du support (1) avec un algorithme de reconnaissance à partir de la topographie de surface.

4. Procédé selon l'une des revendications 1 à 3, dans lequel la géométrie du support (1) et/ou des pneus (2) est prédéterminée.

5. Procédé selon l'une des revendications 1 à 4, dans lequel les critères pour la détermination d'un pneu à saisir au moyen d'un outil de préhension (4) comprend une hauteur du pneu sur le support (12) et/ou un degré de chevauchement du pneu avec d'autres pneus et/ou une fiabilité de la reconnaissance du pneu.

6. Procédé selon l'une des revendications 1 à 5, dans lequel on utilise un outil de préhension (4) qui permet différents modes de préhension pour les pneus (2).

7. Procédé selon la revendication 6, dans lequel on utilise un outil de préhension (4) avec au moins deux mâchoires de préhension (8, 9) mobiles se rapprochant ou s'éloignant l'une de l'autre, qui peuvent être introduites dans l'ouverture des pneus (2) ; ou dans lequel on utilise un outil de préhension (4) avec une mâchoire de préhension mobile (8) et une mâchoire de préhension fixe (9), la mâchoire de préhension mobile (8) pouvant se rapprocher de la mâchoire de préhension fixe (9) ou s'éloigner de celle-ci, et les mâchoires de préhension (8, 9) pouvant être introduites dans l'ouverture des pneus (2).

8. Procédé selon l'une des revendications 1 à 7, dans lequel on utilise à titre de robot industriel un robot à bras articulé (3) et/ou dans lequel le système de capteurs (5) pour la détection de la position et de l'orientation de pneus (2) extérieurs est mû par l'intermédiaire du support (1) avec les pneus (2).

9. Système de dépalettisation pour la mise en oeuvre du procédé selon l'une des revendications précédentes, qui comprend au moins un robot industriel avec un outil de préhension (4), un système de capteurs à trois dimensions (5) avec un mécanisme de déplacement (6) pour détecter la position et l'orientation de pneus (2) extérieurs sur un support (1) et une unité d'évaluation (7), **caractérisé en ce que** la unité d'évaluation (7) est programmée et réalisée pour la mise en oeuvre des étapes de détermination, de calcul, de contrôle et de spécification du procédé selon la revendication 1.

10. Système de dépalettisation selon la revendication 9, dans lequel
- le robot industriel est un robot à bras articulé (3) et/ou
- le mécanisme de déplacement (6) du système de capteurs à trois dimensions est un axe linéaire.

11. Système de dépalettisation selon la revendication 9 ou 10, dans lequel l'outil de préhension (4) comprend au moins deux mâchoires de préhension (8, 9) dont au moins une mâchoire de préhension (8) peut être déplacée contre l'autre mâchoire de préhension (9) ou en éloignement de celle-ci, et un entraînement qui rapproche ou éloigne les deux mâchoires de préhension (8, 9) l'une de l'autre, les mâchoires de préhension. (8, 9) étant réalisées de telle sorte qu'elles peuvent être introduites dans l'ouverture du pneu.

12. Système de dépalettisation selon la revendication 11, dans lequel une commande est prévue pour l'entraînement, qui règle une force de contact des mâchoires de préhension (8, 9) lors de la préhension.

13. Système de dépalettisation selon l'une des revendications 9 à 12, dans lequel
- au moins une des mâchoires de préhension (8, 9) présente, sur une face intérieure et/ou sur une face extérieure qui est appui sur le pneu lors de la préhension, un talon (12) ou un taquet qui empêche un glissement du pneu, et/ou
- au moins une des mâchoires de préhension (8, 9) présente, sur une face intérieure et/ou sur une face extérieure qui est appui sur le pneu lors de la préhension, une garniture ou un revêtement pour augmenter la friction, et/ou
- une ou les deux mâchoires de préhension (8, 9) peuvent être déplacées l'une contre l'autre par translation ou par rotation.

14. Système de dépalettisation selon l'une des revendications 9 à 13, dans lequel l'outil de préhension (4) présente une plaque à bride (13) pour un raccordement au robot industriel, qui se trouve ou peut être ajusté avec sa droite normale à une surface sous un angle différent de 0° par rapport à un axe longitudinal de l'outil de préhension (4).

15. Système de dépalettisation selon l'une des revendications 9 à 14, dans lequel l'unité d'évaluation (7) comprend en supplément un module qui est réalisé pour un calcul de trajectoires pour une nouvelle palettisation des pneus (2) sur un autre support.
